(19) Europäisches Patentamt
European Patent Office
Office européen des brevets

(11) **EP 4 393 884 A1**

(12) **EUROPEAN PATENT APPLICATION**

(43) Date of publication:
**03.07.2024 Bulletin 2024/27**

(51) International Patent Classification (IPC):
**C01G 53/00** (2006.01)      **C01G 53/04** (2006.01)
**H01M 4/525** (2010.01)

(21) Application number: **22216688.6**

(52) Cooperative Patent Classification (CPC):
**C01G 53/04; C01G 53/006; C01G 53/42;
C01G 53/50; H01M 4/525;** C01P 2004/50;
C01P 2004/51; C01P 2004/61; C01P 2006/11;
C01P 2006/12

(22) Date of filing: **27.12.2022**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Umicore Finland OY
67900 Kokkola (FI)**

(72) Inventors:
• **RÄSÄNEN, Samuli
Kokkola (FI)**

• **DONG, Jiachen
Kokkola (FI)**
• **HIETANIEMI, Marianna
Kokkola (FI)**
• **PAAKKONEN, Miika
Kokkola (FI)**
• **VEHKAMÄKI, Ville
Kokkola (FI)**

(74) Representative: **Umicore RDI Patent Department
Watertorenstraat 33
2250 Olen (BE)**

(54) **METHOD FOR MANUFACTURING AQUEOUS SLURRY AND METHOD FOR MANUFACTURING POWDEROUS HYDROXIDE THEREFROM**

(57)    The invention relates to a method for manufacturing an aqueous slurry comprising hydroxide or oxyhydroxide particles of one or more elements, wherein the one or more elements include at least one of Ni, Co and Mn. The method comprises: supplying a flow of a metal salt solution comprising the one or more elements to a reactor vessel for a time period; during the time period, mixing the metal salt solution with an aqueous solution comprising one or more alkali hydroxides, thereby pre-cipitating the hydroxide of the one or more elements and forming the aqueous slurry comprising the hydroxide or oxyhydroxide particles of the one or more elements; and wherein the metal salt solution has a flow rate expressed as a volume per unit of time, wherein the metal salt solution has a concentration of the one or more elements expressed as mol per unit of volume, and wherein the mathematical product of the flow rate and the concentration increases continuously during the time period.

Fig. 4

EP 4 393 884 A1

**Description**

**TECHNICAL FIELD**

Generally, the present invention relates to metal hydroxides that can be used as precursors to cathode active materials for secondary batteries and methods of manufacture thereof. Particularly, however not exclusively, the present invention concerns methods for manufacturing an aqueous slurry comprising hydroxide or oxyhydroxide of at least one or more metal elements, methods for manufacturing powderous hydroxide or oxyhydroxide therefrom, and use of the aqueous slurry or the powderous hydroxide or oxyhydroxide for manufacturing a positive electrode active material for secondary batteries.

**BACKGROUND**

Lithium-ion secondary batteries typically include a negative electrode (anode), an electrolyte, and a positive electrode (cathode) that contains a lithium-transition metal oxide as an active material capable of insertion and desorption of lithium. Lithium-transition metal oxides are generally manufactured from transition-metal hydroxides, oxides or oxyhydroxide manufactured in turn in co-precipitation processes that disclose admixing of a metal salt solution and an alkali solution with the existence of a complexing agent.

It is expected that in the future the lithium-ion battery market will be increasingly dominated by automotive applications. To be competitive, batteries for automotive applications must be produced at the lowest possible cost. A significant fraction of the cost comes from the active material, and the costs of precusor is reflected into those of the active material. Providing these precursors by a more efficient and/or cheaper process, ideally without compromising the quality thereof, can help to lower cost and boost market acceptance of lithium-ion secondary batteries.

In view of above, there is a constant need for further improvements in the manufacturing process of precursors.

**SUMMARY OF THE INVENTION**

The present invention aims to provide improved methods for making materials which may subsequently be used directly/indirectly as precursors of lithium transition metal cathode materials for positive electrodes.

Viewed from a first aspect, the invention can provide a method for manufacturing an aqueous slurry comprising hydroxide or oxyhydroxide particles of one or more elements, wherein the one or more elements include at least one of Ni, Co and Mn. The hydroxide or oxyhydroxide particles can be used, ultimately, as precursors of lithium transition metal cathode active materials for positive electrodes. Such a method according to the present invention comprises:

- supplying a flow of an aqueous metal salt solution comprising the one or more elements to a reactor vessel during a time period,
- during the time period, mixing the metal salt solution with an aqueous solution comprising one or more alkali hydroxides, and optionally also an aqueous solution of ammonia ($NH_{3(aq)}$), thereby precipitating the hydroxide of the one or more elements and forming the aqueous slurry comprising the hydroxide or oxyhydroxide particles of the one or more elements,

wherein the metal salt solution has a flow rate expressed as a volume per unit of time, wherein the metal salt solution has a concentration of the one or more elements expressed as mol per unit of volume, and wherein the mathematical product of the flow rate and the concentration increases continuously during the time period.

The hydroxide or oxyhydroxide particles of the one or more elements according to the present invention have a composition that can be presented by a general formula: $Me\text{-}O_x(OH)_{2\text{-}x}$ , wherein $0 \leq x \leq 2$, and Me includes at least one of the Ni, Co and Mn,d and possibly at least one other element like an impurity such as Na, S, etc.

The time period may be denoted as T1-T2, referring a progress of time starting at time T1, i.e., at the beginning of the time period, and ending at time T2, i.e., at the end of the time period.

According to the present invention, the continuous increase of the mathematical product of the flow rate and the concentration contributes to a more efficient growth to the target median particle size of the precipitated hydroxide. Further, it contributes to an increased production capacity. The concentration of the metal salt solution fed may be expressed as, e.g., mol per milliliter, mol/ml, and the flow rate, which may also be referred as feed rate in the context of the invention, may be expressed as, e.g., milliliter per hour, ml/h, and as a result, the mathematical product of the flow rate and the concentration may be expressed as, e.g., mol per hour, mol/h. It can be understood that, when the concentration of the metal salt solution fed is kept constant, the flow rate is increased continuously during the time period T1-T2. In other words, during the time period T1-T2, at any given time point $T_x$, the flow rate $r_x$ is larger than the flow rate $r_y$ at an earlier time point $T_y$, i.e., $r_x > r_y$, $T2 \geq T_x > T_y \geq T1$.

Thus, the invention provides an improved method to a precipitation process of metal hydroxide which is used as a precursor to a cathode active material. The precipitation process may typically include supplying an aqueous metal salt solution, a neutralizing agent such as alkali hydroxide, and a complexing agent such as an ammonium ion donor to a reaction vessel while stirring, and performing a crystallization reaction.

Following the concept of the first aspect of the present invention, it is also provided a second aspect of the invention, being a method for manufacturing a powderous hydroxide or oxyhydroxide of one or more elements, wherein the method comprises I) providing an aqueous slurry according to the first aspect of the invention, II) separating the hydroxide or oxyhydroxide particles from a liquid fraction of the aqueous slurry and III) drying the separated hydroxide or oxyhydroxide particles.

It is further provided a third aspect of the invention, being a use of an aqueous slurry according to the first aspect of the invention or a powderous hydroxide or oxyhydroxide according to the second aspect of the invention for manufacturing a positive electrode active material for secondary batteries.

It is further provided a forth aspect of the invention, being a method for manufacturing a positive electrode active material by using the hydroxide or oxyhydroxide particles manufactured according to first and second aspects of the invention.

Various embodiments according to the present invention are disclosed in the claims as well as in the description. The embodiments and examples recited in the claims and in the description are mutually freely combinable unless otherwise explicitly stated. Throughout the entire description, if any numerical ranges are provided, the ranges include also the endpoint values unless otherwise explicitly stated.

## BRIEF DESCRIPTION OF THE FIGURES

By means of further guidance, figures are included to better appreciate the teaching of the present invention, wherein:

Fig. 1    shows a schematic timeline of time period T1-T2;
Fig. 2    shows a scanning electron microscope (SEM) image of particles obtained from Example 1;

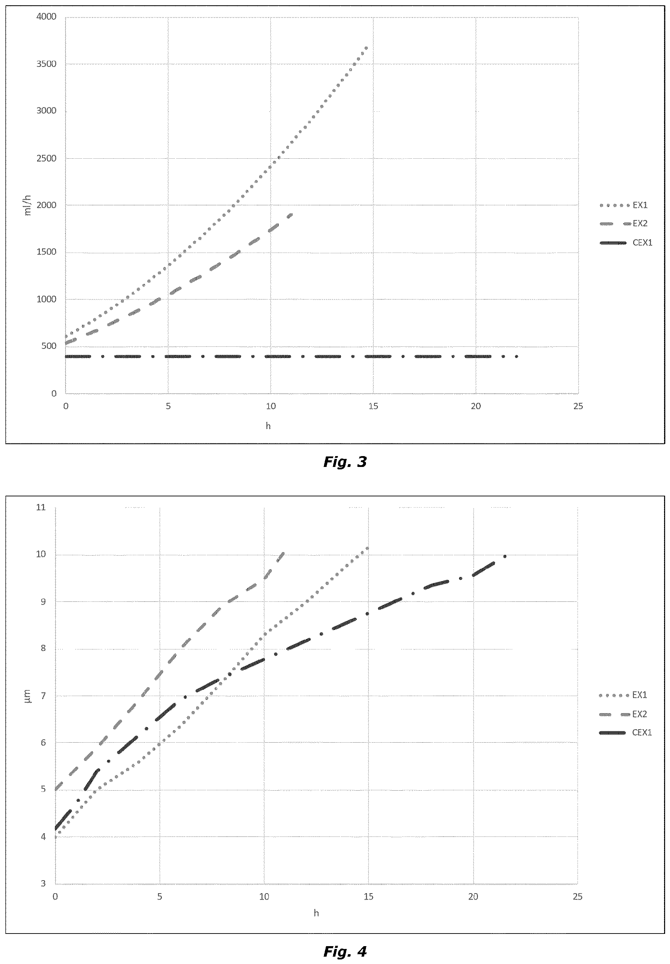

Fig. 3    shows a graph of the feed rate of the metal sulfate solution of the examples as a function of a reaction time; and
Fig. 4    shows a graph of the median particle size of the hydroxides precipitated in the examples as a function of a reaction time.

## DETAILED DESCRIPTION OF THE INVENTION

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

The term "a positive electrode active material" (also known as cathode active material) as used herein and in the claims is defined as a material which is electrochemically active in a positive electrode or cathode. By active material, it must be understood to be a material capable to capture and release Li ions when subjected to a voltage change over a predetermined period of time.

The term "a positive electrode" as used herein is defined as a material comprising a positive electrode active material also in addition to other components which are not electrochemically active, in particular conductivity agents such as carbon black or binders such as PVDF.

The term "concentration of $NH_{3(aq)}$" or the like as used herein means the concentration of ammonia in an aqueous solution.

In a first aspect, the present invention concerns a method for manufacturing an aqueous slurry comprising hydroxide or oxyhydroxide particles of one or more elements, wherein the one or more elements include at least one of Ni, Co and Mn. The hydroxide or oxyhydroxide particles can be used, ultimately, as precursors of lithium transition metal cathode active materials for positive electrodes. Such a method according to the present invention comprises:

- supplying a flow of an aqueous metal salt solution comprising the one or more elements to a reactor vessel during a time period T1-T2, having a beginning T1 and an end T2,
- during the time period T1-T2, mixing the metal salt solution with an aqueous solution comprising one or more alkali hydroxides, and optionally also an aqueous solution of ammonia ($NH_{3(aq)}$), thereby precipitating the hydroxide of the one or more elements and forming the aqueous slurry comprising the hydroxide or oxyhydroxide particles of the one or more elements,

  wherein the metal salt solution is supplied with a flow rate expressed as a volume per unit of time, wherein the metal salt solution has a concentration of the one or more elements expressed as mol per unit of volume, and wherein the mathematical product of the flow rate and the concentration increases continuously during the time period T1-T2.

During the course of manufacturing process, the precipitated hydroxide may be partially oxidized, depending on the atmosphere of the manufacturing process. Thus, the aqueous slurry may contain oxyhydroxide. It is to be noted that an atmospheric condition is not essential to achieve the claimed invention.

According to the present invention, the continuous increase of the mathematical product of the flow rate and the concentration contributes to a more efficient growth to the target median particle size of the precipitated hydroxide. Further, it contributes to an increased production capacity. Further, according to the present invention, the controllability of supplying metal elements to the reactor vessel during the precipitation reaction is improved. For example, according to the present invention, the controllability of supplying of metal elements is implemented in such a way that a constant growth rate of the median particle size of the hydroxide can be achieved. In other words, it is possible to make the precipitation process steadier and more controllable.

In some embodiments, at the beginning of the time period T1, the mathematical product of the flow rate and the concentration is nonzero. In other words, at the beginning of the time period T1, neither the flow rate of the metal salt solution nor the concentration of the metal salt solution is zero.

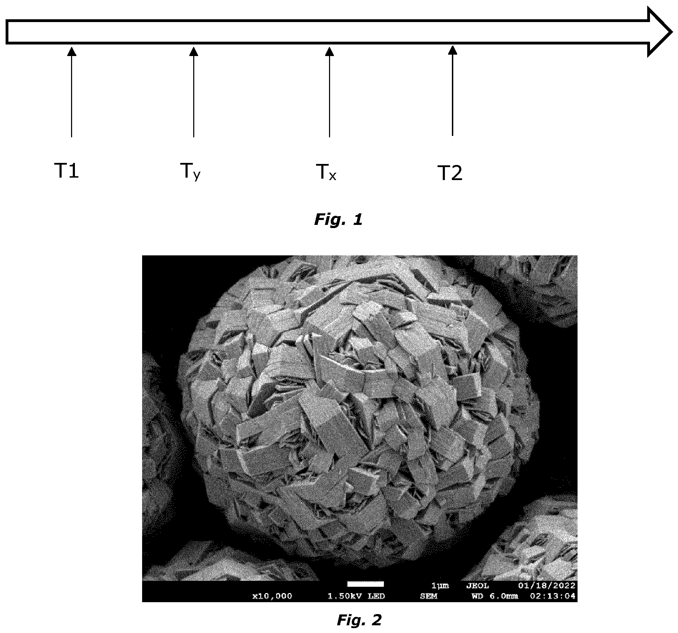

It can be understood that, reference to Figure 1, when the concentration of the metal salt solution fed into the reactor vessel is kept constant, the flow rate is increased continuously during the time period T1-T2. In other words, during the time period T1-T2, at any given time point $T_x$, the flow rate $r_x$ is larger than the flow rate $r_y$ at an earlier time point $T_y$, i.e., $r_x > r_y$, $T2 \geq T_x > T_y \geq T1$. In some embodiments, the flow rate of the metal salt solution increases, preferably continuously, during the time period T1-T2, regardless the concentration of the metal salt solution fed is kept constant or not, as long as the mathematical product of the flow rate and the concentration increases continuously. In some embodiments, the function between the time and the flow rate may be substantially nonlinear.

In some embodiments, the mathematical product of the flow rate and the concentration at the end of the time period T2 is at least 2 times the mathematical product of the flow rate and the concentration at the beginning of the time period T1, preferably the mathematical product at the end of the time period T2 is at least 2.5 times the mathematical product at the beginning of the time period T1, more preferably the mathematical product at the end of the time period T2 is at least 3 times the mathematical product at the beginning of the time period T1. The larger the mathematical product at the end of the time period T2 as compared to the mathematical product at the beginning of the time period T1, the shorter the precipitation time needed to achieve the target median particle size.

In some embodiments, the time period T1-T2 lasts until a target median particle size of the hydroxide or oxyhydroxide particles of the one or more elements is obtained. In other words, the target median particle size of the hydroxide or oxyhydroxide particles is reached at the end of the time period T2. In some embodiments, the time period T1-T2 is at least 8 hours, preferably at least 10 hours, so that a target median particle size ranging between 7 - 12 microns can be achieved.

In some embodiments, the method according to the present invention further comprises, during the time period T1-T2, establishing or maintaining, in the reactor vessel, a range of pH value of the aqueous slurry, the range being superior or equal to 9.0 and inferior or equal to 14.0. When growing particles in the precipitation reaction a pH value higher than 14.0 may result in nucleating new particles instead of growing the particles existing in the reactor vessel. A pH value lower than 9 may result in incomplete precipitation, affecting the efficiency of the process. To further optimize the reaction condition, the pH value is more preferably superior or equal to 10.0 and inferior or equal to 13.5, wherein the pH value of the aqueous slurry is the pH value as measured on a sample of the aqueous slurry at 20°C; and even more preferably, the pH value is at most 12.2 and preferably at least 11.5, and most preferably at most 12.1 and at least 11.6, wherein the pH value of the aqueous slurry is the pH value as measured on a sample of the aqueous slurry at 20°C. In some embodiments, the pH value is in a range of 10.5 to 12.0, preferably 11.0 to 12.0, within said ranges, nucleation process of new nuclei may be prevented while growing of precipitate particles existing in the reactor vessel may be ensured. Controlling the pH value during the precipitation process may be performed by adjusting the amount of aqueous solution comprising one or more alkali hydroxides that is supplied. As appreciated by the skilled person the pH value can be measured by using a pH meter, for example 780 Metrohm meter.

In some embodiments of the method according to the present invention, during the time period T1-T2 the aqueous slurry in the reactor vessel has a temperature which is of at least 45°C, and preferably of at least 75°C, more preferably of at least or equal to 85°C. A temperature lower than 45°C may result in more porous structure of the precipitated hydroxide. In some embodiments, the temperature is at most 99 °C, preferably at most 95°C, and more preferably at most 90°. A temperature higher than 95°C may increase the difficulty in processibility. When the temperature is at least 75°C, preferably at least or equal to 80°C, more preferably at least or equal to 85°C, undesirable cracking phenomenon of the hydroxide or oxyhydroxide particle may be prevented.

In some embodiments of the method according to the present invention, the mixing is performed with a mixing energy of at most 40 kW per $m^3$ of the aqueous slurry, preferably at most 35 kW per $m^3$ of the aqueous slurry. A mixing energy more than 40 kW per $m^3$ may break the hydroxide or oxyhydroxide particles into smaller pieces. In some embodiments, the mixing energy is at least 5 kW per $m^3$ of the aqueous slurry, preferably at least 10 kW per $m^3$ of the aqueous slurry. The disclosed mixing energy contribute to obtaining a homogeneous reaction mixture and avoiding of particle agglomeration.

In some embodiments of the method according to the present invention further comprises, during the time period T1-T2, establishing or maintaining in the reactor vessel, a concentration of $NH_{3(aq)}$ of at least 1.0 g/l and at most 13.0 g/l. By establishing or maintaining it is meant, that an aqueous solution of ammonia ($NH_{3(aq)}$) may be provided in the reaction vessel as a starting solution prior to the beginning of the time period T1, and additionally or alternatively, an aqueous solution of ammonia ($NH_{3(aq)}$) may be supplied to the reaction vessel during the time period T1-T2. A $NH_{3(aq)}$ concentration lower than 1.0 g/l may result in nucleation. A higher $NH_{3(aq)}$ concentration, for example higher than 13.0 g/l, may result in agglomeration, when the particle size of the precipitated hydroxide in the reactor is relatively small, for example less than 4 $\mu$m or less than 3 $\mu$m, and thus under such circumstance, preferably the concentration of $NH_{3(aq)}$ is at least 1.5 g/l and at most 7 g/l, more preferably at least 1.5 g/l and at most 6 g/l, and most preferably at least 2 g/l and at most 4 g/l. On the other hand, when the particle size of the precipitated hydroxide in the reactor is relatively large, for example equal to or larger than 4 $\mu$m, the concentration of $NH_{3(aq)}$ may be towards to the higher end of within the range of between 1.0 g/l and 13.0 g/l; for example the concentration of $NH_{3(aq)}$ may be at least 7 g/l and at most 13.0 g/l, preferably at least 10 g/l and at most 12.0 g/l, to allow a slower growth of particle size (i.e. slower precipitation), which leads to a more dense structure of the particle. As appreciated by the skilled person the $NH_{3(aq)}$ concentration can be measured by using a commercially available titrator, for example Metrhom 848 Titrino Plus.

In some embodiments of the method according to the present invention, the one or more alkali hydroxides include NaOH, KOH, LiOH, CsOH, and RbOH; preferably at least NaOH.

In some embodiments of the method according to the present invention, the aqueous slurry comprising the hydroxide or oxyhydroxide particles of the one or more elements has a liquid fraction and a solid fraction, wherein a part of the liquid fraction is removed from the reactor vessel during the time period and wherein the solid fraction is retained in the reactor vessel during the time period T1-T2. This way a narrow size distribution of the hydroxide or oxyhydroxide particles can be achieved. A narrow size distribution refers to a span value of the hydroxide or oxyhydroxide, expressed as (D90-D10)/D50, typically being in a range of <0.8.

Means for removing a part of the liquid fraction (i.e., mother liquid) of the aqueous slurry is not particularly limited. However, for example, removal of a part of the liquid fraction may be performed by using a commercially available concentrator, which may be connected to the reactor vessel and is capable of selectively removing a fraction of liquid away from the reactor vessel.

In some embodiments of the method according to the present invention, before the beginning of the time period T1, an aqueous slurry of seed particles is provided in the reactor vessel. Using of seed particles instead of in-situ seeding process may prevent further nucleation that is less desirable as further nucleation may lead to formation of small particles that tend to agglomerate, which in turn varies the production quality. Also, due to more available crystal surface as the reaction progresses, more material can be fed, without risking getting nucleation. According to the present invention, the use of seed slurry combined with the disclosed precipitation contribute a steady growth of the hydroxide on the seeds, without further nucleation and agglomeration, so that the aqueous slurry contains the hydroxide or oxyhydroxide particles with a homogeneously distributed desired median particle size and the hydroxide or oxyhydroxide particles possess excellent sphericity. The excellent sphericity of the hydroxide or oxyhydroxide particles according to the present invention, when served as precures for cathode material, stay in the cathode material. In other words, the cathode material also has the excellent sphericity. Sphericity is relevant to higher tap density.

In some embodiments, the seed particles are particles of a hydroxide or oxyhydroxide of at least one metal element, preferably the at least one metal element comprising at least Ni. According to the invention, the metal element(s) for seed particles and for the hydroxide or oxyhydroxide particles may be different, which provides further flexibility to implement the method of the invention.

In some embodiments of the method according to the present invention, the seed particles have a median particle size D'50, and at the end of the time period T2 the hydroxide or oxyhydroxide particles of the one or more elements have a median particle size D50, wherein the ratio D50/ D'50 is at least 2.00 and preferably at least 3.00. The larger the D50/ D'50 ratio, the better the sphericity of the hydroxide or oxyhydroxide particle may be obtained. In some embodiments, D'50 is at least 0.70 μm and at most 3.00 μm, and D50 is at least 3.0 μm and preferably at most 5.0 μm. In some embodiments, D'50 is at least 3.0 μm and at most 5.0 μm, and D50 is at least 8.0 μm. In some embodiments, D50 is at most 15.0 μm, preferably at most 13.0 μm, and more preferably at most 12.0 μm.

In some embodiments, D'50 is at least 0.70 μm and at most 4.00 μm, and D50 is at least 4.0 μm and preferably at most 18.0 μm. In some embodiments, D'50 is at least 4.0 μm and at most 8.0 μm, and D50 is at least 9.0 μm. In some embodiments, D50 is at most 20.0 μm.

The method for determining the particle size distribution is not particularly limited. However, for example, the size distribution can be determined based on the integrated volume value that is measured using a laser diffraction and scattering type particle size analyzer. As the average particle size, it is possible to use percentile values D10, D50, and D90 as the value of the particle diameter at 10%, 50% and 90%, respectively, in the cumulative distribution and a span value of (D90-D10)/D50 as a measure of distribution range.

In some embodiments, wherein an aqueous slurry of seed particles is provided in the reactor vessel, the concentration of the one or more elements in the metal salt solution is kept constant during the time period T1-T2, wherein the flow rate of the metal salt solution (a unit, L/h) at a time instant t within the time period T1-T2 is expressed by the following equation:

$$f_{flow\ rate}(t) = \frac{m_1 \left( \left( \frac{G(t) \cdot \Delta t + D'50}{D'50} \right)^3 - 1 \right) \cdot M_{Me}}{\Delta t \cdot c_{Me} \cdot M_{Me(OH)_2}} \qquad (equation\ 1)$$

wherein $m_1$ is a mass (grams) of the seed particles provided in the reactor vessel, G(t) is a growth rate of the hydroxide or oxyhydroxide particle at the time instant t (μm/h), wherein the value of G(t) is nonzero, Δt is the time period T1-T2 expressed in hour(h), D'50 the median particles size of the seed particles expressed in μm, and $M_{Me}$ is a molar mass of the one or more elements (grams/mol), $c_{Me}$ is the concentration of the one or more elements in the metal salt solution (grams/L) and $M_{Me(OH)2}$ is a molar mass of the hydroxide or oxyhydroxide of the one or more elements (grams/mol). Preferably the value of G(t) is smaller or equal to 2 μm/h, more preferably smaller or equal to 1.5 μm/h. Smaller G(t) value may contribute to a lower porosity.

In some embodiments the value of G(t) is smaller or equal to 1.0 μm/h. In some embodiments the value of G(t) is smaller or equal to 0.5 μm/h. In some embodiments the value of G(t) is smaller or equal to 0.1 μm/h.

The value of G(t) may vary depending on the embodiment. In some embodiments the value of G(t) is varied during the time period T1-T2.

The upper limit of G(t), that is a maximum growth rate of the hydroxide or oxyhydroxide particles, may be dependent on the characteristics of the feed pump and the characteristics of a removal system of a liquid portion (i.e., mother liquid) of the reaction mixture / aqueous slurry, for instance.

In some embodiments, the value of G(t) in the equation does not change during the time period T1-T2, wherein the flow rate of the metal salt solution increases continuously according to equation 1 and the growth rate of the hydroxide or oxyhydroxide particles in the slurry is constant during the time period T1-T2. As such, by continuously increasing the flow rate of the metal salt solution, a constant growth rate of the median particle size of the hydroxide or oxyhydroxide may be obtained. In other words, it may be possible to make the precipitation process steadier and more controllable. This is especially the case when a target median particle size is large, such as at least 10 μm. While other factors stay constant, with the continuously increase of the flow rate, the precipitation time may be saved up to half or even one fourth compared to otherwise similar process but where the metal salt solution is fed at a constant rate throughout the precipitation process.

In some embodiments of the method according to the present invention, the one or more elements in the hydroxide or oxyhydroxide particles include:

- Ni in a content x, wherein 5.0 mol% ≤ 99 mol%,
- Co in a content y, wherein 0 ≤ y ≤ 30.0 mol%, and
- Mn in a content z, wherein 0 ≤ z ≤ 85.0 mol%,
- Al in a content q, wherein 0 ≤ q ≤ 10.0 mol%, and
- one or more additional elements in a content r, wherein the additional elements are elements from the list of B, Ba, Ca, Ce, Cr, Fe, La, Mg, Mo, Nb, Si, Sr, Ti, Y, V, W, Zn, Na, S and Zr, wherein 0 ≤ r ≤ 5.0 mol%, and

wherein x, y, z, q and r are contents expressed as mol% relative to the total molar content of the one or more elements in the hydroxide or oxyhydroxide particles, and wherein x+y+z+q+r = 100 mol%; preferably, wherein x ≥ 60.0 mol%,

wherein $z \leq 30.0$ mol%, and wherein $(y+z) \geq 1.0$ mol%; more preferably, wherein $x \geq 70.0$ mol%, and wherein preferably $x \geq 80.0$ mol; or wherein $z \geq 50.0$ mol%, and preferably wherein $r \leq 3.0$ mol%; and/or wherein $z \geq 60.0$ mol%; and/or wherein $z \leq 90.0$ mol%, preferably wherein $z \leq 85.0$ mol%. The values x, y, z, q, r are measured by Inductively Coupled Plasma (ICP) method. It can be understood that the expression $\geq 0$ includes absence of an element.

According to the present invention, it is also provided a method for manufacturing a powderous hydroxide or oxyhydroxide of one or more elements, wherein the method comprises I) providing an aqueous slurry according to the methods of the invention described above, II) separating the hydroxide or oxyhydroxide particles from a liquid fraction of the aqueous slurry and III) drying the separated hydroxide or oxyhydroxide particles.

During the course of manufacturing process, the hydroxide or oxyhydroxide particles from the aqueous slurry may be further partially oxidized.

For example, a precursor comprising Ni, Co and Mn in a molar ratio x:y:z can be prepared in a mixed form by precipitation reactions, with the following steps: (1) providing a seed slurry, which may be done by continuous precipitation, followed by a batch precipitation of mixed hydroxides in a reactor with a NaOH and mixed metal salt under controlled pH according to the invention as described, (2) removal of the precursor suspension and filtration, (3) drying of the filtered wet cake. In step (1) the mixed salt may be a mixed sulfate salt, and the pH may typically be between 11 and 12. Efficient precursor drying is typically conducted around at 100°C for a certain time to remove most of the moistures. The typical moisture content after drying is below 1wt% and can be measured by the well-known Karl Fischer titrimetric method at 250°C (ASTM D6869). Before drying, the precursor has a pure or ideal hydroxide crystal structure (with space group P-3m1).

In the methods according to the invention, the drying of the hydroxide or oxyhydroxide precursors can be done carefully at well-defined conditions such as temperature, gas atmosphere and time - which are conditions that can interact, for example a higher drying temperature requires less time to obtain the desired product, especially for mass production scale.

The dried hydroxide or oxyhydroxide particles, i.e. powderous hydroxide or oxyhydroxide, according to the invention can be used for manufacturing a positive electrode active material. The powderous hydroxide or oxyhydroxide can be mixed with a lithium source so as to obtain a mixture. The mixture is sintered at a temperature between 650°C and 1000°C. Optionally, a heat treatment at a temperature of 105 °C to 750 °C can be performed before the mixing.

Thus, the present invention also concerns a use of the aqueous slurry comprising hydroxide or oxyhydroxide particles obtainable by a method according to the first aspect of the invention, and a use of a powderous hydroxide or oxyhydroxide obtainable according to the second aspect of the invention, for manufacturing a positive electrode active material for secondary batteries.

**Examples**

The present invention is further illustrated with reference to some examples and comparative examples. In all the examples, a pH value refers to a value measured at a temperature of 20 °C. Further, in all the processes of the examples a reducing atmosphere was ensured by applying a flow of nitrogen gas into the reactor vessel during the precipitation reaction except as otherwise indicated.

Measurement methods used in the examples

pH analysis

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

$NH_{3(aq)}$ concentration analysis

The $NH_{3(aq)}$ concentration was measured from a reactor sample by end point titration using an instrument of Metrhom 848 Titrino Plus. One milliliter of sample solution was added to a titration vessel. 30-40 ml of deionized water and 1 ml of 1M NaOH were added. Sample was titrated to the end point by 0.1M HCl.

Solid content analysis

For the determination of the solid content of precipitated hydroxide in the aqueous slurry, a sample taken from the aqueous slurry (the "reaction mixture" in the examples) was mixed well and 10-30 ml of the mixed sample was pipetted onto the filter paper that was further filtered onto a washed and weighed 0,8 um membrane. The filtered membrane was rinsed with DI water followed by drying and measuring the weight of the dried membrane from which the solid content, expressed as weight of the dried hydroxide per liter of the aqueous slurry in g/l was calculated.

Surface area analysis

The specific surface area (SA) of the example samples was measured with the Brunauer-Emmett-Teller (BET) method by using a Quantachrome Monosorb. A powder sample was put int the sample tube and heated at 90 °C under a nitrogen ($N_2$) gas for 2 hours prior to the measurement in order to remove adsorbed species. The sample was then de-gassed at room temperature for five minutes. The instrument performed the nitrogen adsorption test at 77 K. By obtaining the nitrogen isothermal absorption/desorption curve, the total specific surface area of the sample in $m^2/g$ was derived.

Tap density analysis

The tap density (TD) measurement of the example samples was carried out by mechanically tapping a graduated measuring cylinder (100 ml) containing the sample (having a mass W, around 60-120 g). After observing the initial powder volume, the measuring cylinder was mechanically tapped for 15 mins, so that no further volume (V in $cm^3$) or mass (W) change was observed. The TD was calculated as TD = W/V. The TD measurement was carried out on a J.Engelsmann Stamping volumeter STAV II instrument.

Particle size distribution (PSD) analysis

PSD was measured using a Malvern Mastersizer 3000 with a Hydro MV wet dispersion unit after dispersing particles of a sample in an aqueous medium. To improve the dispersion of the metal hydroxide powder, sufficient ultrasonic irradiation and stirring was applied, and an appropriate surfactant was introduced. Percentile values D10, D50, and D90 are the value of the particle diameter at 10%, 50% and 90%, respectively, in the cumulative distribution. A span value of the hydroxide is a value of (D90-D10)/D50.

Metal content analysis

The metal content of the hydroxides was measured by the Inductively Coupled Plasma - Optical Emission Spectrometry (ICP-OES) method using an Agilent ICP 720-OES instrument. 1 gram of a powder sample of each example was dissolved into 50 mL of high purity hydrochloric acid in an Erlenmeyer flask. The flask was covered by a watch glass and heated on a hot plate at 380 °C until complete dissolution of the sample. After being cooled to room temperature, the solution and the rinsing water of Erlenmeyer flask were transferred to a 250 mL volumetric flask. Afterwards, the volumetric flask was filled with deionized (DI) water up to the 250 mL mark, followed by complete homogenization. An appropriate amount of the solution was taken out by a pipette and transferred into a 250 mL volumetric flask for the second dilution, where the volumetric flask was filled with the internal standard and 10% hydrochloric acid up to the 250 mL mark and then homogenized. Finally, this solution was used for the ICP-OES measurement. The contents of metals, such as Ni, Mn, and Co, are expressed as mol% of the total metal content in the measured hydroxide.

Example 1

An aqueous slurry of metal hydroxide was prepared according to the following process:
A starting solution was prepared by placing 6 L of DI water, 350 mL of 220 g/L $NH_3$(aq), and 515 mL of 800 g/L aqueous slurry comprising seed particles of $Ni_{65}Mn_{15}Co_{20}(OH)_2$ having D50 of 4.0 $\mu$m were added in a reactor vessel having an effective volume of 8.75 L and adjusting the temperature in the reactor vessel to 85 °C and kept at this temperature throughout the process.

Next, a precipitation reaction was performed by adding 120 g/L metal sulfate solution comprising Ni, Mn, and Co (in a stoichiometric molar ratio, Ni:Mn:Co of 65:15:20), 220 g/L $NH_3$(aq), and 230 g/L NaOH solution, while mixing with a power density of around 30 $kW/m^3$ for the first 6 hours and with a power density of around 20 $kW/m^3$ for the rest of the process. A feed rate of the metal sulfate solution was 600 mL/h in the beginning and increased continuously all the time according to equation 1 disclosed hereinabove to keep the particle growth rate constant at 0.4 $\mu$m/h (i.e., G(t) = 0.4 $\mu$m/h). During the reaction a feed rate of the NaOH solution was adjusted so that a pH value of the reaction mixture in the reactor vessel was kept steady at 11.8 $\pm$ 0.1 and a feed rate of the NH3(aq) was adjusted so that a $NH_{3(aq)}$ concentration in the reaction mixture was kept steady at 12.0 $\pm$ 1 g/L. A reactor sample of the reaction mixture was taken every two hours and the D50 was measured from it. The reaction was stopped when the D50 of the reactor sample reached approximately the target value of 10.2 $\mu$m, a duration of the process was 15 h. A part of a liquid fraction of the reaction mixture was pumped out from the reactor during the process by using a concentrator and a solid content of the reaction mixture, which is an aqueous slurry comprising hydroxide particles, in the reactor vessel was around 780 g/L in the end of the process.

Example 2

An aqueous slurry of metal hydroxide was prepared according to the following process:
A starting solution was prepared by placing 6 L of DI water, 350 mL of 220 g/L $NH_3(aq)$, and 447 mL of 440 g/L aqueous slurry comprising seeds particles of $Ni_{94}Mn_{03}Co_{03}(OH)_2$ having D50 of 5.0 $\mu$m were added in a reactor vessel having an effective volume of 8.75 L and adjusting the temperature in the reactor vessel to 85 °C and kept at this temperature throughout the process.

Next, a precipitation reaction was performed by adding 120 g/L metal sulfate solution comprising Ni, Mn, and Co (in a stoichiometric molar ratio, Ni:Mn:Co of 94:03:03), 220 g/L $NH_3(aq)$, and 230 g/L NaOH solution, while mixing with a power density of around 30 kW/m$^3$ for the first 6 hours and with a power density of around 20 kW/m$^3$ for the rest of the process step. A feed rate of the metal sulfate solution was 540 mL/h in the beginning and increased continuously all the time according to equation 1 disclosed hereinabove to keep the particle growth rate constant at 0.5 $\mu$m/h. During the reaction a feed rate of the NaOH solution was adjusted so that a pH value of the reaction mixture in the reactor vessel was kept steady at 11.7 $\pm$ 0.1 and a feed rate of the $NH_3(aq)$ was adjusted so that a $NH_{3\,(aq)}$ concentration in the reaction mixture was kept steady at 12.0 $\pm$ 1 g/L. A reactor sample of the reaction mixture was taken every two hours and the D50 was measured from it. The reaction was stopped when the D50 of the reactor sample reached approximately the target value of 10.0 $\mu$m, a duration of the process was 11 h. A part of a liquid fraction of the reaction mixture was pumped out from the reactor during the process by using an external concentrator and a solid content of the reaction mixture in the reactor vessel was around 180 g/L in the end of the process.

Comparative example 1

An aqueous slurry of metal hydroxide was prepared according to the following process:
A starting solution was prepared by placing 1.6 L of DI water, 50 mL of 220 g/L $NH_3(aq)$, and 185 mL of 726 g/L aqueous slurry comprising seed particles of $Ni_{94}Mn_{03}Co_{03}(OH)_2$ having D50 of 5.0 $\mu$m were added in a reactor vessel having an effective volume of 3.65 L and adjusting the temperature in the reactor vessel to 85 °C and kept at this temperature throughout the process.

Next, a precipitation reaction was performed by adding 120 g/L metal sulfate solution comprising Ni, Mn and Co (in a stoichiometric molar ratio, Ni:Mn:Co of 94:03:03), 220 g/L NH3(aq), and 240 g/L NaOH solution, while mixing with a power density of around 33 kW/m$^3$. A feed rate of the metal sulfate solution was kept constant at 400 mL/h. During the reaction a feed rate of the NaOH solution was adjusted so that a pH value of the reaction mixture in the reactor vessel was kept steady at 11.8 $\pm$ 0.2 and a feed rate of the $NH_3(aq)$ was adjusted so that a $NH_3$ concentration in the reaction mixture was kept steady at 3.0 to 4 g/L. A reactor sample of the reaction mixture was taken every two hours and the D50 was measured from it. The reaction was stopped when the D50 of the reactor sample reached approximately the target value of 10.0 $\mu$m, a duration of the process was 22 h. A part of a liquid fraction of the reaction mixture was pumped out from the reactor during the process by using an external concentrator and a solid content of the reaction mixture in the reactor vessel was around 726 g/L in the end of the process.

Dry products of the examples

The reaction mixtures, i.e., the aqueous slurries of metal hydroxides obtained in all the examples, were filtered and washed with 220 g/L NaOH solution and 60°C DI water. The filter cakes were dried in the oven with 120 °C for 12 hours.

Summary of the examples

Some of the characteristics of the reaction conditions and the aqueous slurries obtained in the examples are illustrated in Table 1. Some of the characteristics of the dried hydroxides obtained in these examples are illustrated in Table 2.

Table 1

| | D'50 Seed size ($\mu$m) | Reactor temp. (°C) | NH$_3$ (g/L) | pH (at 20°C) | Mixing power density (KW /m$^3$) | Precipi tation time [h] | D50 particl e size ($\mu$m) | D50/ D'50 | Span A ($\mu$m), measu red directl y from the slurry |
|---|---|---|---|---|---|---|---|---|---|
| EX1 | 4.0 | 85 | 11-13 | 11.8 $\pm$ 0.1 | 30 / 20 | 15 | 10.2 | 2.6 | 0.58 |
| EX2 | 5.0 | 85 | 12.0 $\pm$ 1 | 11.7 $\pm$ 0.1 | 30 / 20 | 11 | 10.1 | 2.0 | 0.48 |
| CEX1 | 4.2 | 85 | 3-4 | 11.8 $\pm$ 0.1 | 33 | 22 | 10.1 | 2.4 | 0.36 |

Table 2

| | Metal content [(Ni(mol%)/ Mn (mol%)/ Co(mol%)] | D50 ($\mu$m) | span B [(D90-D10)/ D50], measured from dried hydroxide | Tap density (g/m$^3$) | Surface area (m$^2$/g) |
|---|---|---|---|---|---|
| EX1 | 65.10/14.98/19.92 | 10.2 | 0.51 | 2.17 | 2.4 |
| EX2 | 94.19/2.82/2.99 | 10.2 | 0.40 | 1.98 | 3.8 |
| CEX1 | 94.1/3.1/2.8 | 10.0 | 0.36 | 1.98 | 9.73 |

**Claims**

1. A method for manufacturing an aqueous slurry comprising hydroxide or oxyhydroxide particles of one or more elements, wherein the one or more elements include at least one of Ni, Co and Mn, wherein the method comprises:

   - supplying a flow of an aqueous metal salt solution comprising the one or more elements to a reactor vessel during a time period (T1-T2), having a beginning (T1) and an end (T2),
   - during the time period (T1-T2), mixing the metal salt solution with an aqueous solution comprising one or more alkali hydroxides, thereby forming the aqueous slurry comprising the hydroxide or oxyhydroxide particles of the one or more elements,

   wherein the metal salt solution is supplied with a flow rate expressed as a volume per unit of time, wherein the metal salt solution has a concentration of the one or more elements expressed as mol. per unit of volume, and wherein the mathematical product of the flow rate and the concentration increases continuously during the time period (T1-T2).

2. The method according to claim 1, wherein the time period (T1-T2) lasts until a target median particle size D50 of the hydroxide or oxyhydroxide particles of the one or more elements is obtained.

3. The method according to claim 1 or 2, further comprising, during the time period (T1-T2), maintaining, in the reactor vessel, a range of pH value of the aqueous slurry, the range being superior or equal to 9.0 and inferior or equal to 14.0 and more preferably superior or equal to 10.0 and inferior or equal to 13.5, wherein the pH value of the aqueous slurry is the pH value as measured on a sample of the aqueous slurry at 20°C.

4. The method according to any of the previous claims, wherein during the time period (T1-T2) the aqueous slurry in the reactor vessel has a temperature which is of at least 45°C, and preferably of at least 75°C, more preferably of at least or equal to 85°C; and/or the temperature is at most 99 °C, preferably at most 95°C, and more preferably at most 90°.

5. The method according to any of the previous claims, wherein the mixing is performed with a mixing energy of at most 40 kW per m$^3$ of the aqueous slurry, preferably at most 35 kW per m$^3$ of the aqueous slurry; and/or the mixing energy is at least 5 kW per m$^3$ of the aqueous slurry, preferably at least 10 kW per m$^3$ of the aqueous slurry.

6. The method according to any of the previous claims, further comprising, during the time period (T1-T2), maintaining, in the reactor vessel, a concentration of $NH_{3(aq)}$ of at least 1.0 g/l and at most 13.0 g/l.

7. The method according to any of the previous claims, wherein at the end of the time period (T2) the aqueous slurry comprising the hydroxide or oxyhydroxide particles of the one or more elements in the reactor vessel has a solid content which is at least 200 g/l, preferably at least 350 g/l, more preferably at least 600 g/l, even more preferably at least 750 g/l, and most preferably 800 g/l.

8. The method according to any of the previous claims, wherein before the beginning of the time period (T1), an aqueous slurry of seed particles is provided in the reactor vessel, preferably wherein the seeds are particles of a hydroxide or oxyhydroxide of at least one metal element, preferably the at least one metal element comprising at least Ni.

9. The method according to claim 8, wherein the seed particles have a median particle size D'50, wherein at the end of the time period (T2) the hydroxide or oxyhydroxide particles of the one or more elements has a median particle size D50, wherein the ratio D50/ D·50 is at least 2.00 and preferably at least 3.00; and/or wherein D'50 is at least 0.70 µm and at most 3.00 µm, wherein D50 is at least 3.0 µm and preferably at most 5.0 µm; and/or wherein D'50 is at least 3.0 µm and at most 5.0 µm, wherein D50 is at least 8.0 µm; and/or wherein D50 is at most 15.0 µm, preferably at most 13.0 µm, and more preferably at most 12.0 µm.

10. The method according to any of the previous claims, wherein the mathematical product of the flow rate and the concentration at the end of the time period (T2) is at least 2 times the mathematical product of the flow rate and the concentration at the beginning of the time period (T1), preferably the mathematical product at the end of the time period (T2) is at least 2.5 times the mathematical product at the beginning of the time period (T1), more preferably the mathematical product at the end of the time period (T2) is at least 3.0 times the mathematical product at the beginning of the time period (T1).

11. The method according to any of the previous claims, wherein the one or more elements in the hydroxide or oxyhydroxide particles include:

    - Ni in a content x, wherein 5.0 mol% ≤ 99 mol%,
    - Co in a content y, wherein 0 ≤ y ≤ 30.0 mol%, and
    - Mn in a content z, wherein 0 ≤ z ≤ 85.0 mol%,
    - Al in a content q, wherein 0 ≤ q ≤ 10.0 mol%, and
    - one or more additional elements in a content r, wherein the additional elements are elements from the list of B, Ba, Ca, Ce, Cr, Fe, La, Mg, Mo, Nb, Si, Sr, Ti, Y, V, W, Zn, Na, S and Zr, wherein 0 ≤ r ≤ 5.0 mol%, and

    wherein x, y, z, q and r are contents expressed as mol% relative to the total molar content of the one or more elements in the hydroxide or oxyhydroxide particles, and wherein x+y+z+q+r = 100 mol%.

12. The method according to claim 11, wherein x ≥ 60.0 mol%, wherein z ≤ 30.0 mol%, and wherein (y+z) ≥ 1.0 mol%; more preferably, wherein x ≥ 70.0 mol%, and wherein preferably x ≥ 80.0 mol%; or wherein z ≥ 50.0 mol%, and preferably wherein r ≤ 3.0 mol%; and/or wherein z ≥ 60.0 mol%; and/or wherein z ≤ 90.0 mol%, preferably wherein z ≤ 85.0 mol%.

13. The method according to any of claims 8 to 12, wherein the concentration of the one or more elements in the metal salt solution is kept constant during the time period (T1-T2), wherein the flow rate of the metal salt solution at a time instant t within the time period (T1-T2) is expressed by equation 1:

$$f_{flow\,rate}(t) = \frac{m_1 \left( \left( \dfrac{G(t) \cdot \Delta t + D'50}{D'50} \right)^3 - 1 \right) \cdot M_{Me}}{\Delta t \cdot c_{Me} \cdot M_{Me(OH)_2}} \qquad (equation\ 1)$$

wherein $m_1$ is a mass (grams) of the seed particles provided in the reactor vessel, $G(t)$ is a growth rate of the hydroxide or oxyhydroxide particle at the time instant $t$, wherein the value of $G(t)$ is nonzero, $\Delta t$ is the time period (T1-T2) expressed in hour h, $D'50$ the median particles size of the seed particles expressed in µm, and $M_{Me}$ is a molar mass (grams/mol.) of the one or more elements, $c_{Me}$ is the concentration (grams/l) of the one or more elements and $M_{Me(OH)2}$ is a molar mass (grams/mol.) of the hydroxide or oxyhydroxide of the one or more elements, preferably the value of $G(t)$ is smaller or equal to 2 μm/h, more preferably smaller or equal to 1.5 μm/h.

14. A method for manufacturing a powderous hydroxide or oxyhydroxide of one or more elements, wherein the method comprises 1) manufacturing an aqueous slurry comprising hydroxide or oxyhydroxide particles of one or more elements according to any one of the previous claims, 2) separating the hydroxide or oxyhydroxide particles from a liquid fraction of the aqueous slurry and 3) drying the separated hydroxide or oxyhydroxide particles.

15. A method for manufacturing a positive electrode active material comprising 1) manufacturing a powderous hydroxide or oxyhydroxide of one or more elements according to claim 14, 2) mixing the powderous hydroxide or oxyhydroxide with a lithium source so as to obtain a mixture, and 3) sintering the mixture at a temperature between 650°C and 1000°C.

**Fig. 1**

T1    T$_y$    T$_x$    T2

**Fig. 2**

**Fig. 3**

**Fig. 4**

Europäisches
Patentamt

European
Patent Office

Office européen
des brevets

# EUROPEAN SEARCH REPORT

Application Number

EP 22 21 6688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 408 988 B (JINGUI ENERGY MAT LIMITED COMPANY ET AL.) 24 June 2022 (2022-06-24) * abstract; example 1 * | 1-15 | INV. C01G53/00 C01G53/04 H01M4/525 |
| A | US 2021/202941 A1 (KIM DOYU [KR] ET AL) 1 July 2021 (2021-07-01) * paragraphs [0115] – [0119]; claims * | 1-15 | |
| A | US 10 535 873 B2 (LG CHEMICAL LTD [KR]) 14 January 2020 (2020-01-14) * column 16, line 55 – column 17, line 19; claims * | 1-15 | |

TECHNICAL FIELDS
SEARCHED      (IPC)

C01G
H01M

The present search report has been drawn up for all claims

| Place of search | Date of completion of the search | Examiner |
|---|---|---|
| Munich | 30 June 2023 | Marucci, Alessandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 6688

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2023

| Patent document cited in search report | | Publication date | Patent family member(s) | | Publication date |
|---|---|---|---|---|---|
| CN 114408988 | B | 24-06-2022 | NONE | | |
| US 2021202941 | A1 | 01-07-2021 | NONE | | |
| US 10535873 | B2 | 14-01-2020 | CN | 108028369 A | 11-05-2018 |
| | | | EP | 3425703 A1 | 09-01-2019 |
| | | | JP | 6723545 B2 | 15-07-2020 |
| | | | JP | 2018531500 A | 25-10-2018 |
| | | | KR | 20170103699 A | 13-09-2017 |
| | | | PL | 3425703 T3 | 31-03-2020 |
| | | | US | 2018212237 A1 | 26-07-2018 |

EPO FORM P0459

For more details about this annex : see Official Journal of the European Patent Office, No. 12/82